# EUROPEAN PATENT APPLICATION

(11) **EP 3 125 512 A1**
(43) Date of publication of application: **01.02.2017**
(21) Application number: 16173781.2
(22) Date of filing: 09.06.2016
(51) Int. Cl.: H04M 1/725, H04M 19/04, H04M 1/05, H04M 1/60

(54) **SILENT RING INDICATION WHILE LISTENING MUSIC OVER A HEADSET**

(30) Priority: 30.07.2015 CN 201510461271
(71) Applicant: Xiaomi Inc., Beijing 100085 (CN)
(72) Inventor: TAN, Kangxi, 100085 Haidian District (CN); HE, Li, 100085 Haidian District (CN); LIU, Weixing, 100085 Haidian District (CN)
(74) Representative: Reeve, Nicholas Edward

(57) **Abstract**

The present disclosure relates to an event prompting method and an event prompting device. The method includes judging whether the terminal is playing predetermined sound information via a wireless headphone connected with the terminal when receiving an event to be prompted; and sending a silent prompt command to the wireless headphone according to the event to be prompted if the terminal is playing the predetermined sound information via the wireless headphone connected with the terminal, the silent prompt command being configured to control the wireless headphone to perform a silent prompt operation.

## Description

### TECHNICAL FIELD

The present disclosure generally relates to the field of terminal technology, and more particularly, to an event prompting method and an event prompting device.

### BACKGROUND

At present, when listening to a song via a Bluetooth headphone, if a terminal receives an incoming call, an instant communication message and so on, the current song will be interrupted to perform the ringing prompt operation of these messages. For example, when the terminal receives a short message, music playing will pause, and a prompt sound for the short message will be heard, and then the song is continued playing. Thus, as long as the event to be prompted is received, song playing will be directly suspended, and a prompt sound corresponding to the event to be prompted will be played, so that a user cannot hear the entire song, which affects the listening experience of the user.

### SUMMARY OF THE INVENTION

Embodiments of the present disclosure provide an event prompting method and an event prompting device, including the following technical solutions.

According to a first aspect of embodiments of the present disclosure, there is provided an event prompting method for use in a terminal, including: judging whether the terminal is playing predetermined sound information via a wireless headphone connected with the terminal when receiving an event to be prompted; and sending a silent prompt command to the wireless headphone according to the event to be prompted if the terminal is playing the predetermined sound information via the wireless headphone connected with the terminal, the silent prompt command being configured to control the wireless headphone to perform a silent prompt operation.

In an embodiment, sending the silent prompt command to the wireless headphone according to the event to be prompted includes: determining a type of the event to be prompted; determining a silent prompt intensity level corresponding to the type of the event to be prompted according to a predetermined correspondence between types of events and silent prompt intensity levels;
generating the silent prompt command according to the silent prompt intensity level; and sending the silent prompt command to the wireless headphone, in which the wireless headphone is configured to perform the silent prompt operation according to the silent prompt intensity level in the silent prompt command.

In an embodiment, the method further includes: receiving a setting command of the event to be prompted which is input; and setting the predetermined type of the event to be prompted and the silent prompt intensity level corresponding to the type of the event to be prompted according to the setting command of the event to be prompted.

In an embodiment, determining the type of the event to be prompted includes: obtaining an application to which the event to be prompted belongs; and determining the type of the event to be prompted according to the application.

In an embodiment, before sending the silent prompt command to the wireless headphone according to the event to be prompted, the method further includes: judging whether a current user of the wireless headphone is a predetermined user; sending the silent prompt command to the wireless headphone according to the event to be prompted if the current user is the predetermined user; and not sending the silent prompt command to the wireless headphone according to the event to be prompted if the current user is not the predetermined user.

In an embodiment, before sending the silent prompt command to the wireless headphone according to the event to be prompted, the method further includes: obtaining an identity of the current user of the wireless headphone, wherein judging whether the current user of the wireless headphone is the predetermined user includes: judging whether the identity of the current user is matched with a predetermined user identity; deciding that the current user is the predetermined user if the identity of the current user is matched with the predetermined user identity; and deciding that the current user is not the predetermined user if the identity of the current user is not matched with the predetermined user identity.

In an embodiment, obtaining the identity of the current user of the wireless headphone includes: obtaining the identity of the current user input; or receiving the identity of the current user from the wireless headphone.

According to a second aspect of embodiments of the present disclosure, there is provided an event prompting method for use in a wireless headphone, including: receiving a silent prompt command from a terminal connected with the wireless headphone; and performing a silent prompt operation corresponding to the silent prompt command.

In an embodiment, performing the silent prompt operation corresponding to the silent prompt command includes: analyzing a silent prompt intensity level in the silent prompt command; and performing the silent prompt operation according to the silent prompt intensity level.

In an embodiment, the method further includes: obtaining an identity of a current user of the wireless headphone input; and sending the identity of the current user to the terminal.

In an embodiment, the silent prompt operation includes at least one of a vibration prompt operation and a flicker prompt operation.

According to a third aspect of embodiments of the present disclosure, there is provided an event prompting device for use in a terminal, including: a first judging module configured to judge whether the terminal is playing predetermined sound information via a wireless headphone connected with the terminal when an event to be prompted is received; and a sending module configured to send a silent prompt command to the wireless headphone according to the event to be prompted if the terminal is playing the predetermined sound information via the wireless headphone connected with the terminal, the silent prompt command being configured to control the wireless headphone to perform a silent prompt operation.

In an embodiment, the sending module includes: a first determining sub-module configured to determine a type of the event to be prompted; a second determining sub-module configured to determine a silent prompt intensity level corresponding to the type of the event to be prompted according to a predetermined correspondence between types of events and silent prompt intensity levels; a generating sub-module configured to generate the silent prompt command according to the silent prompt intensity level; and a sending sub-module configured to send the silent prompt command to the wireless headphone, in which the wireless headphone is configured to perform the silent prompt operation according to the silent prompt intensity level in the silent prompt command.

In an embodiment, the first determining sub-module is configured to obtain an application to which the event to be prompted belongs; and determine the type of the event to be prompted according to the application.

In an embodiment, the device further includes: a second judging module configured to judge whether a current user of the wireless headphone is a predetermined user before the silent prompt command is sent to the wireless headphone according to the event to be prompted; and a processing module configured to trigger the sending module if the current user is the predetermined user, and not to trigger the sending module if the current user is not the predetermined user.

In an embodiment, the device further includes: an obtaining module configured to obtain an identity of the current user of the wireless headphone before the silent prompt command is sent to the wireless headphone according to the event to be prompted, wherein the second judging module includes: a judging sub-module configured to judge whether the identity of the current user is matched with a predetermined user identity; a first deciding sub-module configured to decide that the current user is the predetermined user if the identity of the current user is matched with the predetermined user identity; and a second deciding sub-module configured to decide that the current user is not the predetermined user if the identity of the current user is not matched with the predetermined user identity.

In an embodiment, the obtaining module includes: an identity obtaining sub-module configured to obtain the identity of the current user input; or an identity receiving sub-module configured to receive the identity of the current user from the wireless headphone.

According to a fourth aspect of embodiments of the present disclosure, there is provided an event prompting device for use in a wireless headphone, including: a receiving module configured to receive a silent prompt command from a terminal connected with the wireless headphone; and a performing module configured to perform a silent prompt operation corresponding to the silent prompt command.

In an embodiment, the performing module includes: an analyzing sub-module configured to analyze a silent prompt intensity level in the silent prompt command; and an operation performing sub-module configured to perform the silent prompt operation according to the silent prompt intensity level.

In an embodiment, the device further includes: an identity obtaining module configured to obtain an identity of a current user of the wireless headphone input; and a sending module configured to send the identity of the current user to the terminal.

In an embodiment, the silent prompt operation includes at least one of a vibration prompt operation and a flicker prompt operation.

According to a fifth aspect of embodiments of the present disclosure, there is provided an event prompting device for use in a terminal, including: a processor; and a memory for storing instructions executable by the processor, wherein the processor is configured to: judge whether the terminal is playing predetermined sound information via a wireless headphone connected with the terminal when receiving an event to be prompted; and send a silent prompt command to the wireless headphone according to the event to be prompted if the terminal is playing the predetermined sound information via the wireless headphone connected with the terminal, the silent prompt command being configured to control the wireless headphone to perform a silent prompt operation.

According to a sixth aspect of embodiments of the present disclosure, there is provided an event prompting device for use in a wireless headphone, including: a processor; and a memory for storing instructions executable by the processor, wherein the processor is configured to: receive a silent prompt command from a terminal connected with the wireless headphone; and perform a silent prompt operation corresponding to the silent prompt command.

The technical solutions according to embodiments of the present disclosure may have advantageous effects as follows.

With the above technical solutions, when the terminal receives the event to be prompted, if the terminal is playing the predetermined sound information via the wireless headphone connected with the terminal, the terminal sends the silent prompt command to the wireless headphone, such that the wireless headphone performs the silent prompt operation, such as a vibration prompt operation, a flicker prompt operation, etc. Thus, the predetermined sound information which is being played will not be interrupted, and it is ensured that a user is given a prompt about the event, thus enhancing user experience.

It is to be understood that both the foregoing general description and the following detailed description are illustrative and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing an event prompting method according to an illustrative embodiment.
Fig. 2 is a flow chart showing the step S102 in an event prompting method according to an illustrative embodiment.
Fig. 3 is a flow chart showing an event prompting method according to an illustrative embodiment.
Fig. 4 is a flow chart showing another event prompting method according to an illustrative embodiment.
Fig. 5 is a flow chart showing still another event prompting method according to an illustrative embodiment.
Fig. 6A is a flow chart showing yet another event prompting method according to an illustrative embodiment.
Fig. 6B is a flow chart showing yet another event prompting method according to an illustrative embodiment.
Fig. 7 is a flow chart showing an event prompting method according to an illustrative embodiment.
Fig. 8 is a flow chart showing another event prompting method according to an illustrative embodiment.
Fig. 9 is a flow chart showing still another event prompting method according to an illustrative embodiment.
Fig. 10 is a block diagram showing an event prompting device according to an illustrative embodiment.
Fig. 11 is a block diagram showing a sending module in an event prompting device according to an illustrative embodiment.
Fig. 12 is a block diagram showing another event prompting device according to an illustrative embodiment.
Fig. 13A is a block diagram showing still another event prompting device according to an illustrative embodiment.
Fig. 13B is a block diagram showing a second judging module in an event prompting device according to an illustrative embodiment.
Fig. 14 is a block diagram showing an obtaining module in an event prompting device according to an illustrative embodiment.
Fig. 15 is a block diagram showing an event prompting device according to an illustrative embodiment.
Fig. 16 is a block diagram showing a performing module in an event prompting device according to an illustrative embodiment.
Fig. 17 is a block diagram showing another event prompting device according to an illustrative embodiment.
Fig. 18 is a block diagram showing an event prompting device according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of the illustrative embodiments do not represent all implementations consistent with the disclosure. Instead, they are merely examples of apparatuses and methods consistent with aspects related to the disclosure as recited in the appended claims.

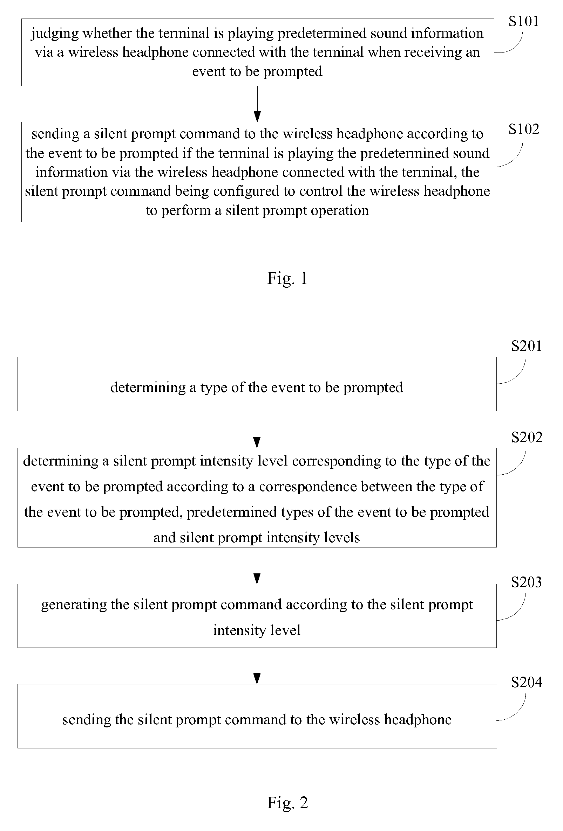

Fig. 1 is the flow chart showing an event prompting method according to an illustrative embodiment. The method may be used in a terminal apparatus on which event prompting needs to be performed. As shown in Fig. 1, the method includes steps S101 and S102.

In step S101, it is judged whether the terminal is playing predetermined sound information via a wireless headphone connected with the terminal when receiving an event to be prompted. Predetermined sound information may include music, an audio output from the terminal, a voice call, and so on.

In step S102, a silent prompt command is sent to the wireless headphone according to the event to be prompted if the terminal is playing the predetermined sound information via the wireless headphone connected with the terminal. The silent prompt command is configured to control the wireless headphone to perform a silent prompt operation.

The wireless headphone herein refers to a headphone that can be connected with the terminal apparatus without a connecting line. For example, the wireless headphone may be a Bluetooth headphone, an infrared headphone, etc. The event to be prompted includes an event to be prompted on which sound prompting needs to be performed.

In this embodiment, when the terminal receives the event to be prompted, if the terminal is playing the predetermined sound information via the wireless headphone connected with the terminal, the terminal sends the silent prompt command to the wireless headphone, such that the wireless headphone performs the silent prompt operation, such as a vibration prompt operation, a flicker prompt operation, etc. Thus, the predetermined sound information which is being played will not be interrupted, and it is ensured that a user is given a prompt about the event, thus enhancing user experience.

The user or a manufacturer may set the predetermined sound information, for example, songs, videos and so on favored by the user may be set as the predetermined sound information. Thus, when playing the predetermined sound information, if the terminal receives other events to be prompted which need playing sound, the terminal sends the silent prompt command to the wireless headphone, such that it may be ensured that the user may play the entire sound information favored by himself/herself without being disturbed by other events to be prompted.

In an embodiment, the silent prompt operation refers to a prompt operation without making a sound. For example, the silent prompt operation may include at least one of a vibration prompt operation and a flicker prompt operation.

As shown in Fig. 2, in an embodiment, the above step S102 includes steps S201 to S204.

In step S201, a type of the event to be prompted is determined. There may be different types of events according to different events to be prompted, such as a message prompt type (for example, a short message prompt type, an instant communication message prompt type), a system music playing type, a system video playing type, etc.

In step S202, a silent prompt intensity level corresponding to the type of the event to be prompted is determined according to a correspondence between the type of the event to be prompted, predetermined types of the event to be prompted and silent prompt intensity level.

A setting command of the event to be prompted which is input may be received, and the predetermined type of the event to be prompted and the silent prompt intensity level corresponding to the type of the event to be prompted may be set according to the setting command of the event to be prompted. For example, an incoming call generally indicates the matter is urgent, so the corresponding silent prompt intensity level may be set to level 3 when the type of the event to be prompted is an incoming call prompt. Thus, when the command to be prompted received by the wireless headphone is an incoming call prompt and the silent prompt intensity level is level 3, the silent prompt operation may be performed at a 3-level vibration prompt intensity or a 3-level flicker prompt intensity. An instant communication message is generally of an urgency degree lower than that of the incoming call. Thus, the corresponding silent prompt intensity level may be set to level 1 when the type of the event to be prompted is an instant communication message prompt. Thus, when the command to be prompted received by the wireless headphone is an instant communication message prompt and the silent prompt intensity level is level 1, the silent prompt operation may be performed at a 1-level vibration prompt intensity or a 1-level flicker prompt intensity. The higher the silent prompt intensity level is, the higher the prompt intensity is. The lower the silent prompt intensity level is, the lower the prompt intensity is. The prompt intensity may be vibration intensity, vibration frequency, flicker brightness, flicker frequency, etc.

In step S203, the silent prompt command is generated according to the silent prompt intensity level.

In step S204, the silent prompt command is sent to the wireless headphone, in which the wireless headphone is configured to perform the silent prompt operation according to the silent prompt intensity level in the silent prompt command.

In this embodiment, the terminal sends silent prompt commands with different prompt intensity levels for different types of events to be prompted, such that the wireless headphone may perform different silent prompt operations. Thus, the terminal may obtain the type of the event to be prompted according to the silent prompt operation so as to determine the urgency degree of the event to be prompted, such that the user may conveniently judge whether to handle the event to be prompted as soon as possible according to the level of the silent prompt operation, thus avoiding the user from missing an important prompt event.

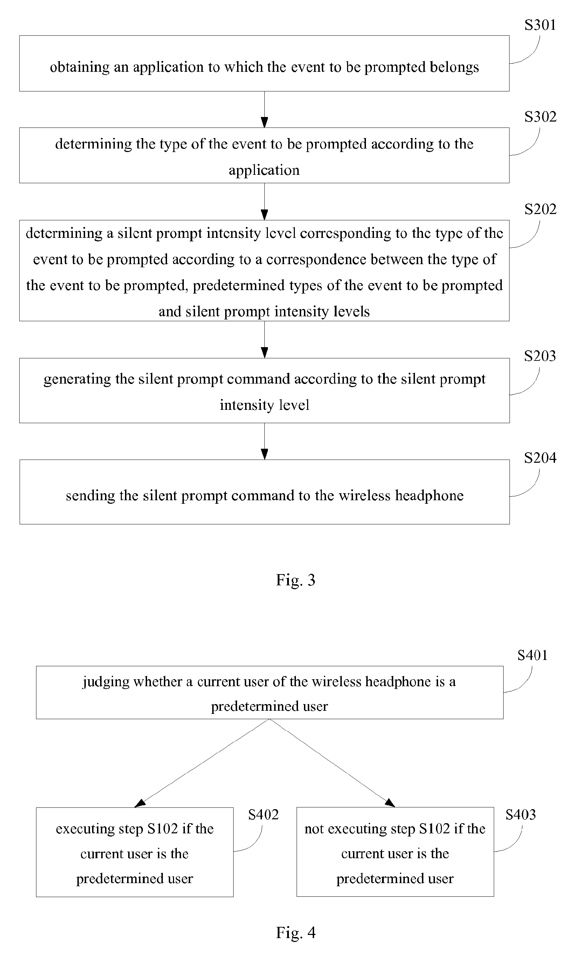

As shown in Fig. 3, in an embodiment, the above step S201 may include steps S301 to S302.

In step S301, an application to which the event to be prompted belongs is obtained.

In step S302, the type of the event to be prompted is determined according to the application.

In this embodiment, the type of the event to be prompted may be determined according to the application to which the event to be prompted belongs. For example, when the application to which the event to be prompted belongs is a call application, the type of the event to be prompted is an incoming call prompt. When the application to which the event to be prompted belongs is a short message application, instant communication software, etc., the type of the event to be prompted is an instant communication message type. When the application to which the event to be prompted belongs is a multimedia application, the type of the event to be prompted is a system sound/video playing type.

Thus, different types of events to be prompted may be accurately judged according to the applications to which the events to be prompted belongs, so as to give silent prompts with different intensities, such that the user may determine whether to handle the event to be prompted immediately according to different intensities of silent prompts, thus enhancing user experience.

As shown in Fig. 4, in an embodiment, before executing step S102 "sending the silent prompt command to the wireless headphone according to the event to be prompted", the method further includes steps S401 to S403.

In step S401, it is judged whether a current user of the wireless headphone is a predetermined user.

In step S402, the step of sending the silent prompt command to the wireless headphone according to the event to be prompted (that is the above step S102) is executed if the current user is the predetermined user.

In step S403, the step of sending the silent prompt command to the wireless headphone according to the event to be prompted (that is the above step S102) is not executed if the current user is not the predetermined user.

In this embodiment, an owner of the terminal may be set as the predetermined user. Thus, after the terminal receives the event to be prompted, the terminal judges whether the current user of the wireless headphone is the owner of the terminal; if the current user is the owner, the terminal may send the silent prompt command to the wireless headphone to prompt the owner; if the current user is not the owner, the terminal does not need to process the event to be prompted, so the terminal may not execute the step of sending the silent prompt command to the wireless headphone according to the event to be prompted, that is give no prompts. In this way, it is ensured that the owner may not miss the prompt, and a non-owner may listen to the predetermined sound information normally, thus further enhancing user experience.

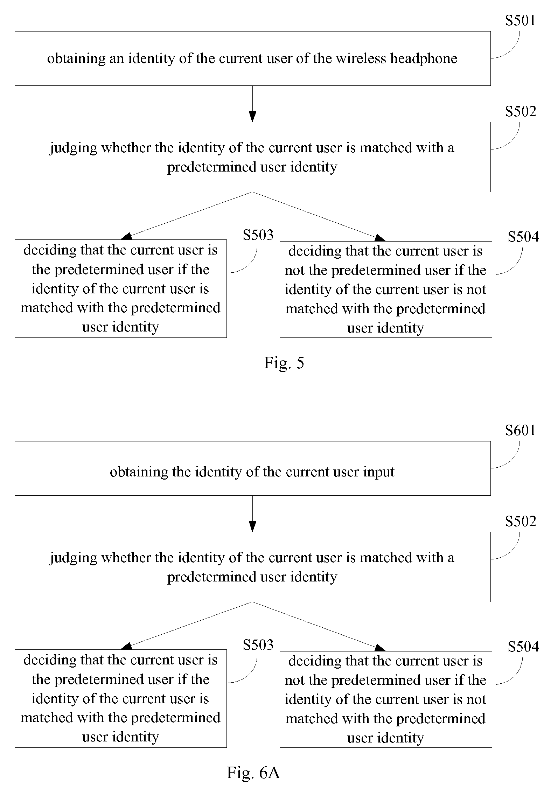

As shown in Fig. 5, in an embodiment, before sending the silent prompt command to the wireless headphone according to the event to be prompted, the method further includes step S501.

In step S501, an identity of the current user of the wireless headphone is obtained.

In this case, the above step S401 includes steps S502 to S504.

In step S502, it is judged whether the identity of the current user is matched with a predetermined user identity.

In step S503, it is decided that the current user is the predetermined user if the identity of the current user is matched with the predetermined user identity.

In step S504, it is decided that the current user is not the predetermined user if the identity of the current user is not matched with the predetermined user identity.

In this embodiment, it may be determined whether the current user is the predetermined user according to the identity of the current user, so as to perform different operations according to different determination results, thus realizing different processing for the predetermined user and a non-predetermined user and consequently enhancing user experience.

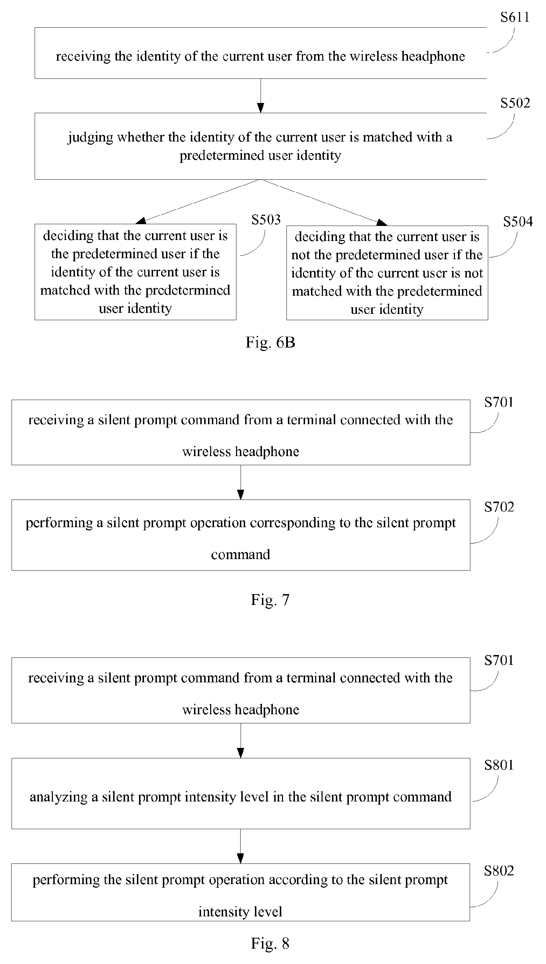

As shown in Figs. 6A and 6B, in an embodiment, the above step S501 includes step S601 or S611.

As shown in Fig. 6A, in step S601, the identity of the current user input is obtained.

As shown in Fig. 6B, in step S611, the identity of the current user from the wireless headphone is received.

In this embodiment, an interface may be provided on the terminal, and the user may input the identity thereof in the interface. The terminal may also obtain the identity of the current user from the wireless headphone. Certainly, the terminal may also obtain the identity of the current user in other ways. For example, a headshot of the current user is taken and compared with a headshot of the predetermined user, if the headshot of the current user is matched with the headshot of the predetermined user, the current user is the predetermined user, otherwise, the current user is not the predetermined user. Alternatively, fingerprint information of the current user may be obtained and compared with fingerprint information of the predetermined user, if the fingerprint information of the current user is matched with the fingerprint information of the predetermined user, the current user is the predetermined user, otherwise, the current user is not the predetermined user.

Embodiments of the present disclosure also provide an event prompting method for use in a wireless headphone. As shown in Fig. 7, the method includes steps S701 to S702.

In step S701, a silent prompt command from a terminal connected with the wireless headphone is received.

In step S702, a silent prompt operation corresponding to the silent prompt command is performed.

In this embodiment, when the terminal receives the event to be prompted, if the terminal is playing predetermined sound information via the wireless headphone connected with the terminal, the terminal sends the silent prompt command to the wireless headphone, such that the wireless headphone performs the silent prompt operation, such as a vibration prompt operation, a flicker prompt operation, etc. Thus, the predetermined sound information which is being played will not be interrupted, and it is ensured that a user is given a prompt about the event, thus enhancing user experience.

The user or a manufacturer may set the predetermined sound information, for example, songs, videos and so on favored by the user may be set as the predetermined sound information. Thus, when playing the predetermined sound information, if the terminal receives other events to be prompted which need playing sound, the terminal sends the silent prompt command to the wireless headphone, such that it may be ensured that the user may play the entire sound information favored by himself/herself without being disturbed by other events to be prompted.

In an embodiment, the silent prompt operation includes at least one of a vibration prompt operation and a flicker prompt operation.

As shown in Fig. 8, in an embodiment, the above step S702 includes steps S801 to S802.

In step S801, a silent prompt intensity level in the silent prompt command is analyzed.

In step S802, the silent prompt operation is performed according to the silent prompt intensity level.

In this embodiment, the terminal sends silent prompt commands with different prompt intensity levels for different types of events to be prompted, such that the wireless headphone may perform different silent prompt operations. Thus, the user may conveniently judge whether to handle the event to be prompted as soon as possible according to the level of the silent prompt operation, thus avoiding the user missing important prompt events.

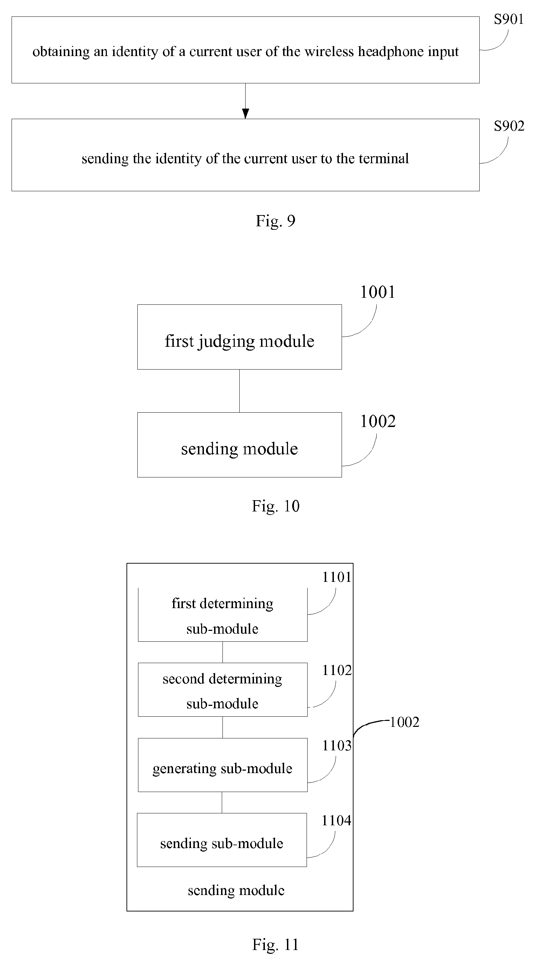

As shown in Fig. 9, in an embodiment, the above method further includes steps S901 and S902.

In step S901, an identity of a current user of the wireless headphone input is obtained.

In step S902, the identity of the current user is sent to the terminal.

In this embodiment, the wireless headphone may obtain the identity of the current user input. For example, a button or an interface may be provided on the wireless headphone. For example, two buttons are provided, a first button corresponds to an identity of a predetermined user, and a second button corresponds to a non-predetermined user. The terminal may know whether the current user is the predetermined user or the non-predetermined user after receiving the identity corresponding to a triggered button. Thus, the terminal may determine whether the current user is the predetermined user according to the identity of the current user, so as to perform different operations according to different determination results, thus realizing different processing for the predetermined user and a non-predetermined user and consequently enhancing user experience.

The following device embodiments of the present disclosure may be used to perform the method embodiments of the present disclosure.

Fig. 10 is a block diagram showing an event prompting device according to an illustrative embodiment. The device may be implemented as a part or all of a terminal apparatus via software, hardware, or a combination thereof. As shown in Fig. 10, the event prompting device includes a first judging module 1001 configured to judge whether the terminal is playing predetermined sound information via a wireless headphone connected with the terminal when an event to be prompted is received; and a sending module 1002 configured to send a silent prompt command to the wireless headphone according to the event to be prompted if the terminal is playing the predetermined sound information via the wireless headphone connected with the terminal, the silent prompt command being configured to control the wireless headphone to perform a silent prompt operation.

As shown in Fig. 11, in an embodiment, the sending module 1002 includes a first determining sub-module 1101 configured to determine a type of the event to be prompted; a second determining sub-module 1102 configured to determine a silent prompt intensity level corresponding to the type of the event to be prompted according to a correspondence between the type of the event to be prompted, predetermined types of the event to be prompted and silent prompt intensity levels; a generating sub-module 1103 configured to generate the silent prompt command according to the silent prompt intensity level; and a sending sub-module 1104 configured to send the silent prompt command to the wireless headphone, in which the wireless headphone is configured to perform the silent prompt operation according to the silent prompt intensity level in the silent prompt command.

In an embodiment, the first determining sub-module 1101 is configured to: obtain an application to which the event to be prompted belongs; and determine the type of the event to be prompted according to the application.

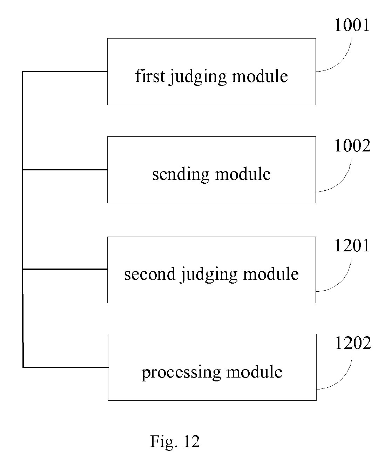

As shown in Fig. 12, in an embodiment, the device further includes a second judging module 1201 configured to judge whether a current user of the wireless headphone is a predetermined user before the silent prompt command is sent to the wireless headphone according to the event to be prompted; and a processing module 1202 configured to trigger the sending module if the current user is the predetermined user, and not to trigger the sending module if the current user is not the predetermined user.

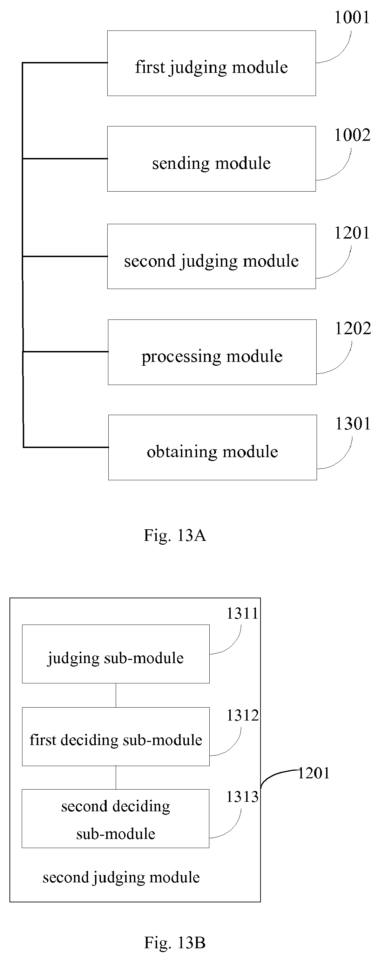

As shown in Fig. 13A, in an embodiment, the device further includes an obtaining module 1301 configured to obtain an identity of the current user of the wireless headphone before the silent prompt command is sent to the wireless headphone according to the event to be prompted.

As shown in Fig. 13B, in an embodiment, the second judging module 1201 includes: a judging sub-module 1311 configured to judge whether the identity of the current user is matched with a predetermined user identity; a first deciding sub-module 1312 configured to decide that the current user is the predetermined user if the identity of the current user is matched with the predetermined user identity; and a second deciding sub-module 1313 configured to decide that the current user is not the predetermined user if the identity of the current user is not matched with the predetermined user identity.

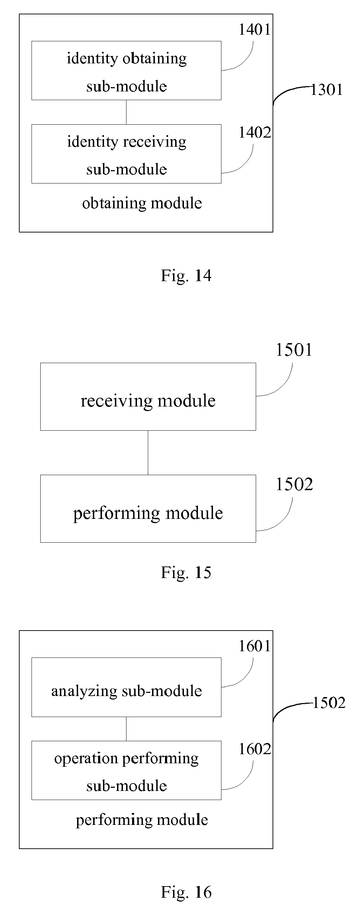

As shown in Fig. 14, in an embodiment, the obtaining module 1301 includes: an identity obtaining sub-module 1401 configured to obtain the identity of the current user input; or an identity receiving sub-module 1402 configured to receive the identity of the current user from the wireless headphone.

Fig. 15 is a block diagram showing an event prompting device according to an illustrative embodiment. The device may be realized as a part or all of a wireless headphone via software, hardware, or a combination thereof. As shown in Fig. 15, the event prompting device includes: a receiving module 1501 configured to receive a silent prompt command from a terminal connected with the wireless headphone; and a performing module 1502 configured to perform a silent prompt operation corresponding to the silent prompt command.

In an embodiment, the silent prompt operation includes at least one of a vibration prompt operation and a flicker prompt operation.

As shown in Fig. 16, in an embodiment, the performing module 1502 includes: an analyzing sub-module 1601 configured to analyze a silent prompt intensity level in the silent prompt command; and an operation performing sub-module 1602 configured to perform the silent prompt operation according to the silent prompt intensity level.

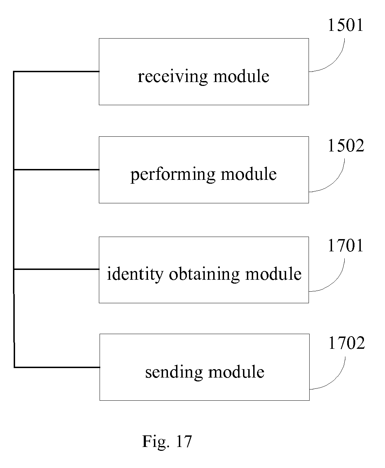

As shown in Fig. 17, in an embodiment, the device further includes an identity obtaining module 1701 configured to obtain an identity of a current user of the wireless headphone input; and a sending module 1702 configured to send the identity of the current user to the terminal.

According to a fifth aspect of embodiments of the present disclosure, an event prompting device for use in a terminal is provided. The device includes: a processor; and a memory for storing instructions executable by the processor. The processor is configured to: judge whether the terminal is playing predetermined sound information via a wireless headphone connected with the terminal when receiving an event to be prompted; and send a silent prompt command to the wireless headphone according to the event to be prompted if the terminal is playing the predetermined sound information via the wireless headphone connected with the terminal, in which the silent prompt command is configured to control the wireless headphone to perform a silent prompt operation.

The processor sends the silent prompt command to the wireless headphone according to the event to be prompted by determining a type of the event to be prompted; determining a silent prompt intensity level corresponding to the type of the event to be prompted according to a correspondence between the type of the event to be prompted, predetermined types of the event to be prompted and silent prompt intensity levels; generating the silent prompt command according to the silent prompt intensity level; and sending the silent prompt command to the wireless headphone, in which the wireless headphone is configured to perform the silent prompt operation according to the silent prompt intensity level in the silent prompt command.

The processor is further configured to: receive a setting command of the event to be prompted which is input; and set the predetermined type of the event to be prompted and the silent prompt intensity level corresponding to the type of the event to be prompted according to the setting command of the event to be prompted.

The processor determines the type of the event to be prompted by obtaining an application to which the event to be prompted belongs; and determining the type of the event to be prompted according to the application.

The processor is further configured to: judge whether a current user of the wireless headphone is a predetermined user before sending the silent prompt command to the wireless headphone according to the event to be prompted; execute sending the silent prompt command to the wireless headphone according to the event to be prompted if the current user is the predetermined user; and not to execute sending the silent prompt command to the wireless headphone according to the event to be prompted if the current user is not the predetermined user.

The processor is further configured to: obtain an identity of the current user of the wireless headphone before sending the silent prompt command to the wireless headphone according to the event to be prompted. The processor judges whether the current user of the wireless headphone is the predetermined user by judging whether the identity of the current user is matched with a predetermined user identity; deciding that the current user is the predetermined user if the identity of the current user is matched with the predetermined user identity; and deciding that the current user is not the predetermined user if the identity of the current user is not matched with the predetermined user identity.

The processor obtains the identity of the current user of the wireless headphone by obtaining the identity of the current user input; or receiving the identity of the current user from the wireless headphone.

According to a sixth aspect of embodiments of the present disclosure, an event prompting device for use in a wireless headphone is provided. The device includes a processor; and a memory for storing instructions executable by the processor. The processor is configured to receive a silent prompt command from a terminal connected with the wireless headphone; and perform a silent prompt operation corresponding to the silent prompt command.

The processor performs the silent prompt operation corresponding to the silent prompt command by analyzing a silent prompt intensity level in the silent prompt command; and performing the silent prompt operation according to the silent prompt intensity level.

The processor is further configured to obtain an identity of a current user of the wireless headphone input; and send the identity of the current user to the terminal.

The silent prompt operation includes at least one of a vibration prompt operation and a flicker prompt operation.

With respect to the devices in the above embodiments, the specific manners for performing operations for individual modules therein have been described in detail in the embodiments regarding the methods, and so will not be elaborated herein.

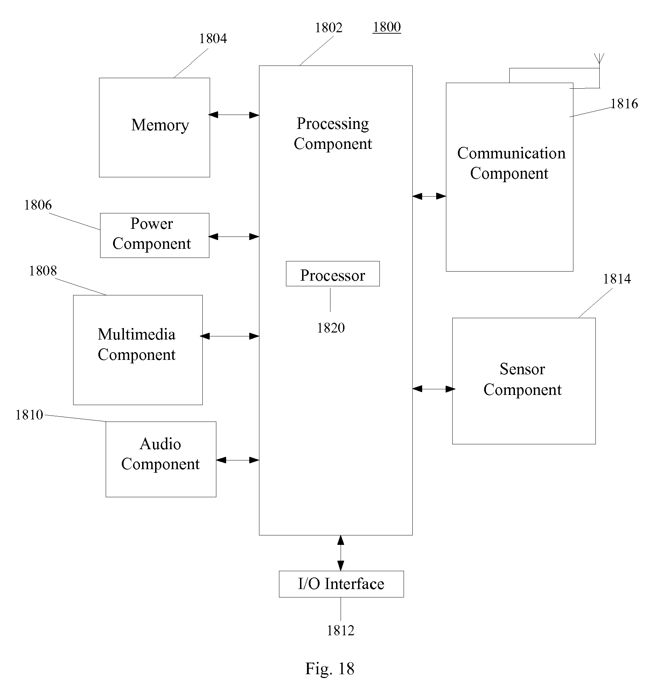

Fig. 18 is a block diagram of an event prompting device according to an illustrative embodiment. The device is applicable to a terminal apparatus. For example, the device 1800 may be a mobile phone, a computer, a digital broadcast terminal, a message receiving and sending device, a gaming console, a tablet device, a medical device, exercise equipment, a personal digital assistant, and the like.

The device 1800 may include one or more of the following components: a processing component 1802, a memory 1804, a power component 1806, a multimedia component 1808, an audio component 1810, an input/output (I/O) interface 1812, a sensor component 1814, and a communication component 1816.

The processing component 1802 typically controls overall operations of the device 1800, such as the operations associated with display, telephone calls, data communications, camera operations, and recording operations. The processing component 1802 may include one or more processors 1820 to execute instructions to perform all or part of the steps in the above described methods. Moreover, the processing component 1802 may include one or more modules which facilitate the interaction between the processing component 1802 and other components. For instance, the processing component 1802 may include a multimedia module to facilitate the interaction between the multimedia component 1808 and the processing component 1802.

The memory 1804 is configured to store various types of data to support the operation of the device 1800. Examples of such data include instructions for any applications or methods operated on the device 1800, contact data, phonebook data, messages, pictures, video, etc. The memory 1804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1806 provides power to various components of the device 1800. The power component 1806 may include a power management system, one or more power sources, and any other components associated with the generation, management, and distribution of power in the device 1800.

The multimedia component 1808 includes a screen providing an output interface between the device 1800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1808 includes a front camera and/or a rear camera. The front camera and/or the rear camera may receive an external multimedia datum while the device 1800 is in an operation mode, such as a photographing mode or a video mode. Each of the front camera and the rear camera may be a fixed optical lens system or have focus and optical zoom capability.

The audio component 1810 is configured to output and/or input audio signals. For example, the audio component 1810 includes a microphone ("MIC") configured to receive an external audio signal when the device 1800 is in an operation mode, such as a call mode, a recording mode, and a voice recognition mode. The received audio signal may be further stored in the memory 1804 or transmitted via the communication component 1816. In some embodiments, the audio component 1810 further includes a speaker to output audio signals.

The I/O interface 1812 provides an interface between the processing component 1802 and peripheral interface modules, such as a keyboard, a click wheel, buttons, and the like. The buttons may include, but are not limited to, a home button, a volume button, a starting button, and a locking button.

The sensor component 1814 includes one or more sensors to provide status assessments of various aspects of the device 1800. For instance, the sensor component 1814 may detect an open/closed status of the device 1800, relative positioning of components, for example, the display and the keypad, of the device 1800, a change in position of the device 1800 or a component of the device 1800, a presence or absence of user contact with the device 1800, an orientation or an acceleration/deceleration of the device 1800, and a change in temperature of the device 1800. The sensor component 1814 may include a proximity sensor configured to detect the presence of nearby objects without any physical contact. The sensor component 1814 may also include a light sensor, such as a CMOS or CCD image sensor, for use in imaging applications. In some embodiments, the sensor component 1814 may also include an accelerometer sensor, a gyroscope sensor, a magnetic sensor, a pressure sensor, or a temperature sensor.

The communication component 1816 is configured to facilitate communication, wired or wirelessly, between the device 1800 and other devices. The device 1800 can access a wireless network based on a communication standard, such as WiFi, 2G, or 3G, or a combination thereof. In one illustrative embodiment, the communication component 1816 receives a broadcast signal or broadcast associated information from an external broadcast management system via a broadcast channel. In one illustrative embodiment, the communication component 1816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the device 1800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In illustrative embodiments, there is also provided a non-transitory computer-readable storage medium including instructions, such as included in the memory 1804, executable by the processor 1820 in the device 1800, for performing the above-described methods. For example, the non-transitory computer-readable storage medium may be a ROM, a RAM, a CD-ROM, a magnetic tape, a floppy disc, an optical data storage device, and the like.

In an embodiment, a non-transitory computer-readable storage medium is provided having stored therein instructions that, when executed by the processor of the device 1800, causes the device 1800 to perform the abovementioned event prompting method. The method includes: judging whether the terminal is playing predetermined sound information via a wireless headphone connected with the terminal when receiving an event to be prompted; and sending a silent prompt command to the wireless headphone according to the event to be prompted if the terminal is playing the predetermined sound information via the wireless headphone connected with the terminal, the silent prompt command being configured to control the wireless headphone to perform a silent prompt operation.

In an embodiment, sending the silent prompt command to the wireless headphone according to the event to be prompted includes: determining a type of the event to be prompted; determining a silent prompt intensity level corresponding to the type of the event to be prompted according to a correspondence between the type of the event to be prompted, predetermined types of the event to be prompted and silent prompt intensity levels; generating the silent prompt command according to the silent prompt intensity level; and sending the silent prompt command to the wireless headphone, in which the wireless headphone is configured to perform the silent prompt operation according to the silent prompt intensity level in the silent prompt command.

In an embodiment, the method further includes: receiving a setting command of the event to be prompted which is input; and setting the predetermined type of the event to be prompted and the silent prompt intensity level corresponding to the type of the event to be prompted according to the setting command of the event to be prompted.

In an embodiment, determining the type of the event to be prompted includes: obtaining an application to which the event to be prompted belongs; and determining the type of the event to be prompted according to the application.

In an embodiment, before sending the silent prompt command to the wireless headphone according to the event to be prompted, the method further includes: judging whether a current user of the wireless headphone is a predetermined user; executing sending the silent prompt command to the wireless headphone according to the event to be prompted if the current user is the predetermined user; and not executing sending the silent prompt command to the wireless headphone according to the event to be prompted if the current user is not the predetermined user.

In an embodiment, before sending the silent prompt command to the wireless headphone according to the event to be prompted, the method further includes: obtaining an identity of the current user of the wireless headphone, wherein judging whether the current user of the wireless headphone is the predetermined user includes: judging whether the identity of the current user is matched with a predetermined user identity; deciding that the current user is the predetermined user if the identity of the current user is matched with the predetermined user identity; and deciding that the current user is not the predetermined user if the identity of the current user is not matched with the predetermined user identity.

In an embodiment, obtaining the identity of the current user of the wireless headphone includes: obtaining the identity of the current user input; or receiving the identity of the current user from the wireless headphone.

Although individual modules and units have been described according to their respective functions, a single module or unit may be used in place of one or more of the modules or units described. The modules or units may be implemented in software, hardware, or a combination thereof.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as illustrative only, with the scope of the invention being indicated by the following claims.

## Claims

1. An event prompting method for use in a terminal, comprising:
judging (S101), when an event to be prompted is received, whether the terminal is playing predetermined sound information via a wireless headphone connected with the terminal; and
sending (S102), if the terminal is playing the predetermined sound information, a silent prompt command to the wireless headphone according to the event to be prompted , the silent prompt command being configured to control the wireless headphone to perform a silent prompt operation.

2. The method of claim 1, wherein sending (S102) the silent prompt command to the wireless headphone according to the event to be prompted comprises:
determining (S201) a type of the event to be prompted;
determining (S202) a silent prompt intensity level corresponding to the type of the event to be prompted according to a predetermined correspondence between types of events and silent prompt intensity levels;
generating (S203) the silent prompt command according to the silent prompt intensity level; and
sending (S204) the silent prompt command to the wireless headphone, in which the wireless headphone is configured to perform the silent prompt operation according to the silent prompt intensity level in the silent prompt command.

3. The method of claim 2, wherein determining (S201) the type of the event to be prompted comprises:
obtaining (S301) an application to which the event to be prompted belongs; and
determining (S302) the type of the event to be prompted according to the application.

4. The method of any one of claims 1 to 3 further comprising, before sending the silent prompt command to the wireless headphone according to the event to be prompted:
judging (S401) whether a current user of the wireless headphone is a predetermined user;
sending (S402) the silent prompt command to the wireless headphone according to the event to be prompted if the current user is the predetermined user; and
not sending (S403) the silent prompt command to the wireless headphone according to the event to be prompted if the current user is not the predetermined user.

5. The method of claim 4 further comprising, before sending the silent prompt command to the wireless headphone according to the event to be prompted:
obtaining (S501) an identity of the current user of the wireless headphone,
wherein judging whether the current user of the wireless headphone is the predetermined user comprises:
judging (S502) whether the identity of the current user is matched with a predetermined user identity;
deciding (S503) that the current user is the predetermined user if the identity of the current user is matched with the predetermined user identity; and
deciding (S504) that the current user is not the predetermined user if the identity of the current user is not matched with the predetermined user identity.

6. The method of claim 5, wherein obtaining the identity of the current user of the wireless headphone comprises:
obtaining (S601) an input of the identity of the current user; or
receiving the identity of the current user from the wireless headphone (S611).

7. An event prompting method for use in a wireless headphone, comprising:
receiving (S701) a silent prompt command from a terminal connected with the wireless headphone; and
performing (S702) a silent prompt operation corresponding to the silent prompt command.

8. The method of claim 7, wherein performing (S702) the silent prompt operation corresponding to the silent prompt command comprises:
analyzing (S801) a silent prompt intensity level in the silent prompt command; and
performing (S802) the silent prompt operation according to the silent prompt intensity level.

9. The method of claim 7 or 8, further comprising:
obtaining (S901) an identity of a current user of the wireless headphone input; and
sending (S902) the identity of the current user to the terminal.

10. The method of any one of claims 7 to 9, wherein the silent prompt operation comprises at least one of a vibration prompt operation and a flicker prompt operation.

11. An event prompting device for use in a terminal, comprising:
a first judging module (1001) configured to judge, when an event to be prompted is received, whether the terminal is playing predetermined sound information via a wireless headphone connected with the terminal; and
a sending module (1002) configured to send, if the terminal is playing the predetermined sound information, a silent prompt command to the wireless headphone according to the event to be prompted, the silent prompt command being configured to control the wireless headphone to perform a silent prompt operation.

12. An event prompting device for use in a wireless headphone, comprising:
a receiving module (1501) configured to receive a silent prompt command from a terminal connected with the wireless headphone; and
a performing module (1502) configured to perform a silent prompt operation corresponding to the silent prompt command.

13. A non-transitory computer-readable storage medium having stored therein instructions that, when executed by a processor (1800, 1820) of a terminal, causes the terminal to perform an event prompting method, the method comprising:
judging (S101), when an event to be prompted is received, whether the terminal is playing predetermined sound information via a wireless headphone connected with the terminal; and
sending (S102), if the terminal is playing the predetermined sound information, a silent prompt command to the wireless headphone according to the event to be prompted, the silent prompt command being configured to control the wireless headphone to perform a silent prompt operation.

14. A non-transitory computer-readable storage medium having stored therein instructions that, when executed by a processor (1800, 1820) of a wireless headphone, causes the wireless headphone to perform an event prompting method, the method comprising:
receiving (S701) a silent prompt command from a terminal connected with the wireless headphone; and
performing (S702) a silent prompt operation corresponding to the silent prompt command.
